# EUROPEAN PATENT SPECIFICATION

(11) **EP 1 137 254 B1**
(45) Date of publication and mention of the grant of the patent: **07.05.2008**
(21) Application number: 01103379.2
(22) Date of filing: 13.02.2001
(51) Int. Cl.: H04N 1/327, H04N 1/32

(54) **Facsimile device**
Faksimilegerät
Télécopieur

(30) Priority: 25.02.2000 JP 2000048642; 25.04.2000 JP 2000123577
(43) Date of publication of application: 26.09.2001
(73) Proprietor: Oki Data Corporation, Tokyo 108-8551 (JP)
(72) Inventor: Nakazawa, Kazuo, Minato-ku, Tokyo 108 (JP); Iwata, Kenji, Minato-ku, Tokyo 108 (JP)
(74) Representative: Böck, Bernhard

(56) References cited:
- EP-A- 0 292 082
- EP-A- 0 798 916
- WO-A-91/16752
- CN-A- 1 211 866
- US-A- 3 914 539
- PATENT ABSTRACTS OF JAPAN vol. 014, no. 455 (E-0985), 28 September 1990 (1990-09-28) & JP 02 182069 A (TAMURA ELECTRIC WORKS LTD), 16 July 1990 (1990-07-16)
- DATABASE EPODOC [Online] EUROPEAN PATENT OFFICE, THE HAGUE, NL; KIM HYUNG-TAE: "Facsimile interface apparatus" XP001091418 & KR 9 703 418 B (DAEWOO TELECOM LTD) 18 March 1997 (1997-03-18)

## Description

The present invention relates to a facsimile device, and more particularly to a facsimile device that responds to a ringing signal from a switching system prior to facsimile communication.

The facsimile device receives a ringing signal as an AC voltage to call the facsimile device through a communication line from the switching system before the start of reception of a facsimile data signal from the switching system. On detecting the reception of a ringing signal, the facsimile device forms a DC loop connected to the line to supply the switching system with a DC current indicating that it is ready to receive a facsimile data signal. In addition, the facsimile device forms an AC loop connected to the line and connected in parallel with the DC loop to receive facsimile data output through the line from the switching system in response to the DC current. The switching system recognizes that the facsimile device is ready for facsimile communication so long as it detects a DC current (an answer signal) from the facsimile device in response to the ringing signal, and outputs facsimile data to the facsimile device. The above-mentioned DC loop includes a change-over element that opens or closes the DC loop, and also a protective circuit that, responding to application of a high voltage, prevents the change-over element from being subjected to a voltage larger than the withstand voltage of the change-over element, such as an extremely high voltage caused by lightning.

Document US-A-3 914 539 discloses a system for automatically activating a facsimile receiver in response to a call signal. In response to a call signal from a facsimile transmitter, a closed DC loop of a telephone subscriber line is established and a power supply circuit is energized, and in response to a status signal transmitted after the call signal, the facsimile receiver is set into a desired reception mode so that video information may be automatically received and the transmitted images or pictures may be reproduced at the receiver. When the reception of video information is completed, the closed DC loop is automatically opened and the power supply circuit is also automatically de-energized. Furthermore, if a malfunction of a recorder or printer in the facsimile receiver should occur, the received video information is switched to be transferred to a magnetic tape recorder. Therefore, after the malfunction of the printer has been remedied, the printer may reproduce the images or pictures from the video information recorded on the magnetic tape.

From the document WO 91/16752 a protective circuit for telecommunications system to protect equipment such as facsimile machines is known. The circuit includes a pair of signal lines to be attached to the telecommunications system. The signal lines are connected to an earth line by means of a gas filled protector. A pair of varistors are arranged so that each line is connected to the earth line via one of the varistors, while located in each signal line, between the gas filled protector and the varistor is a resistor. The gas filled protectors act to limit the voltage applied to the equipment should the signal lines be subjected to a lightining strike.

However, when a ringing signal containing an over-voltage greater than the operating voltage of the protective circuit comes, a DC current resulting from the over-voltage flows back to the switching system. Then, the switching system mistakes the DC current that passed through the protective circuit and comes back to it for a DC current that ran through the DC loop and returns to it even though there has not been formed a DC loop for conducting a DC current to indicate that the facsimile device is ready to communicate. As the result, the switching system stops sending the ringing signal and is going to transmit facsimile data. At this point in time, however, the facsimile device has not formed the DC loop based on the detection of the ringing signal. Having stopped sending a ringing signal, the switching system is unable to receive from the facsimile device a DC current which informs that the facsimile device is ready to communicate. For this reason, the switching system cannot recognize that the facsimile device is ready for facsimile communication and cannot start facsimile communication, which has been a problem yet to be solved.

To prevent this inability to recognize communicability, it is required to check the return of a DC current to the switching system after having passed through the protective circuit, which is attributable to the ringing signal containing over-voltage. To this end, a conceivable solution is to set the operating voltage of the protective circuit at a high level. However, it is desirable to set the operating voltage of the protective circuit to a low level in order to ensure the protection of the change-over element from an impulse voltage, such as lightning.

Therefore, the present invention has as its object to provide a facsimile device that can prevent malfunctioning of the change-over element even if it receives a ringing signal containing a large voltage greater than the withstand voltage of the change-over element included in the DC loop for sending the switching system a DC current which indicates that the facsimile device is ready to receive a facsimile data signal.

According to the present invention, there is provided a facsimile device having an AC loop to be formed for being connected to a communication line to receive a facsimile data signal from a switching system following a ringing signal when detecting the ringing signal of an AC voltage to call the facsimile device sent through the line from the switching system; and a DC loop to be formed for being connected to the line in parallel with the AC loop to send the switching system a DC current indicating that the facsimile device is ready to receive the facsimile data, comprising: a change-over element, inserted in the DC loop, for closing or opening the DC loop; a protective circuit selectively connectable to the DC loop to protect the change-over element by allowing a current to flow through a by-pass formed by the protective circuit and a change over circuit, the current being produced when a voltage larger than the AC voltage of the ringing signal is applied to the change-over element; and a change-over circuit which is configured to perform opening/closing actions so as to cut off the connection between the DC loop and the protective circuit when receiving the ringing signal, and afterward, establishes a connection between the DC loop and the protective circuit not later than when the ringing signal stops.

It is preferable that the protective circuit protects the change-over element from lightning.

It is preferable that the protective circuit is connected in parallel with the change-over element by the change-over circuit, and wherein the change-over circuit is connected in series with the protective circuit.

It is preferable that the protective circuit is connected in parallel with the change-over element by the change-over circuit, and wherein the change-over circuit is connected in series with the change-over element and also in series with the protective circuit to simultaneously opens or closes the DC loop and connects the protective circuit to the DC loop.

It is further preferable that the protective circuit is a varistor, the change-over circuit is a relay, and the change-over element is a photo coupler.

It is preferable that the facsimile device further comprises an adjusting circuit for operating the change-over circuit to isolate the protective circuit from the DC loop for a time from when the ringing signal is received until a specified time elapses.

It is preferable that the facsimile device further comprises an adjusting circuit for operating the change-over circuit to connect the protective circuit to the DC loop in response to the formation of the DC loop by the change-over element.

It is preferable that the facsimile device further comprises a telephone responsive to the ringing signal, wherein when the telephone responds to the ringing signal, the AC loop is used to detect whether or not a facsimile procedure signal indicative of a start of facsimile communication is received through the line.

According to the facsimile device in the present invention, the change-over circuit performs opening/closing actions such that when receiving from the switching system a ringing signal to call the facsimile device before receiving facsimile data, it cuts off the connection between the DC loop for sending the switching system a DC current to indicate that the facsimile device is ready to receive facsimile data and the protective circuit connectable to the DC loop for conducting a DC current to protect the change-over element in the DC loop from a large voltage greater than the withstand voltage of the change-over element, and it establishes the connection between the DC loop and the protective circuit not later than when the above-mentioned ringing signal stops. Therefore, the protective circuit does not conduct a DC current instantaneously in response to the over-voltage even when the ringing signal contains over-voltage while the facsimile device is receiving the ringing signal. For this reason, the switching system does not stop sending a ringing signal to the facsimile device, so that the facsimile device can establish the DC loop based on a ringing signal from the switching system.

Preferred embodiments of the invention are now described with reference to the drawings in which:
Fig. 1 is a diagram showing a structure of the facsimile device according to a first embodiment of the present invention;
Fig. 2 is a time chart showing the operation of the facsimile device according to the first embodiment;
Fig. 3 is a diagram showing a structure of the facsimile device according to a second embodiment of the present invention;
Fig. 4 is a time chart showing the operation of the facsimile device according to the second embodiment;
Fig. 5 is a diagram showing a structure of the facsimile device according to a third embodiment of the present invention;
Fig. 6 is a time chart showing the operation of the facsimile device according to the third embodiment;

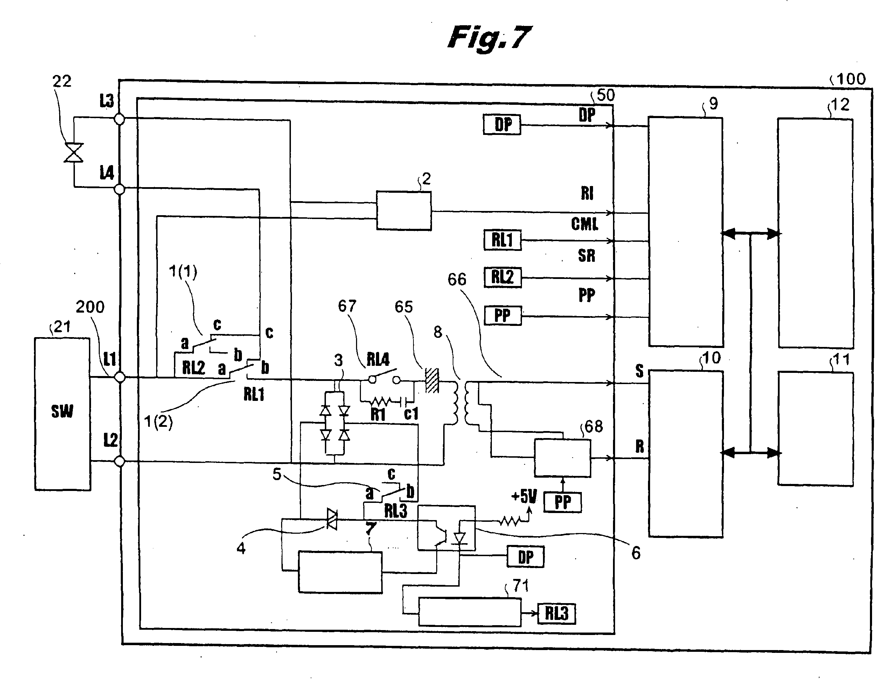

Fig. 7 is a diagram showing a structure of the facsimile device according to a fourth embodiment of the present invention;
Fig. 8 is a diagram showing the adjusting in the fourth embodiment;
Fig. 9 is a time chart showing the operation of the adjusting in the fourth embodiment; and
Fig. 10 is a diagram showing a structure of the facsimile device of a fifth embodiment of the present invention.

### First Embodiment

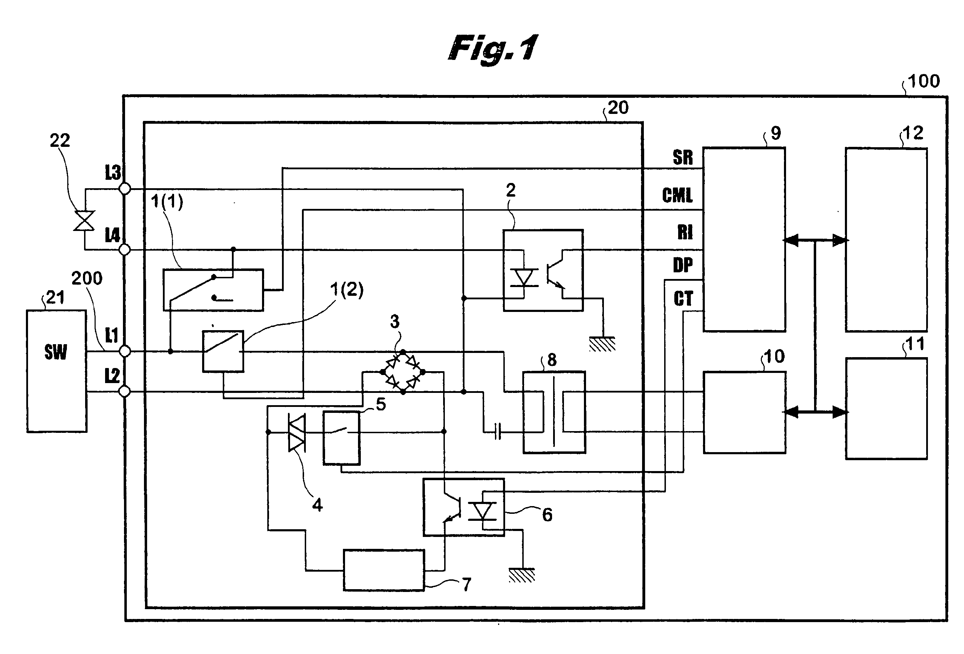

Fig. 1 shows a structure of a first embodiment of the facsimile device according to the present invention. Before describing the structure of the facsimile device in the first embodiment, a basic concept of the facsimile device will be explained. Facsimile device 100 according to the first embodiment sends or receives facsimile data to or from the other facsimile device (not shown) through a communication line 200 and a switching system SW 21, and before sending or receiving facsimile data, performs communication control with the switching system 21 on the basis of AC an voltage of a ringing signal to call the facsimile device on this side. During communication control and during transmission or reception of facsimile data, the switching system 21 keeps applying a DC voltage to the facsimile device and the facsimile device keeps the DC loop established and connected to the line 200. As a result, the DC voltage produced by the DC voltage flows to the DC loop, and the switching system, by detecting this DC current, decides that the facsimile device 100 is ready for communication. As shown in Fig. 1, the facsimile device 100 comprises a line connection circuit 20, connected to the line 200, for communication control and transmission and reception of facsimile data, a modem 10 for facsimile communication through the line connection circuit 20, and a controller 12 for controlling the operation of the whole facsimile device 100, an I/O part 9 for control of the line connection circuit 20 by the controller 12, and a memory 11 for storing data for control by the controller 12 and facsimile communication by the modem 10. The facsimile device 100 further comprises a telephone 22 capable of responding to a ringing signal sent out during communication control mentioned above.

The controller 12, formed by a CPU for example, according to programs stored in the memory 11, controls and supervises the operation of the line connection circuit 20 through the I/O part 9, and also carries out facsimile communication through the modem 10.

The line connection circuit 20 includes a Connection Make Line (CML) relay 1(1), a CML relay 1(2), detector 2, a rectifier 3, a circuit protector 4, a change-over switch 5, a photo coupler 6, a DC loop maintaining circuit 7, and a transformer 8.

The CML relay 1(1), by a Send-Receive (SR) signal from the I/O part 9 under control of the controller 12, establishes or releases a connection between the line 200 and the I/O part 9, to thereby form or release a channel to detect a ringing signal from a local switch.

The CML relay 1(2), by a CML signal from the I/O part 9 under control of the controller 12, forms an AC loop for transmitting or receiving facsimile data or releases the formation of the AC loop. This AC loop is also used to transmit a signal to control the operation of the controller 12, the signal being output by the telephone 22 in response to the ringing signal.

The detector 2 is formed by a photo coupler, for example. When receiving a ringing signal (RI signal) as an AC voltage from the switching system 21 through the line 200 prior to transmitting or receiving facsimile data, the detector 2 outputs a RI detection signal to the I/O part indicating that it has received the RI signal.

The rectifier 3, the photo coupler 6 with a switching function, and a DC loop maintaining circuit 7 constitute a DC loop mentioned above. More specifically, during communication control before transmission or reception of facsimile data, when the detector 2 detects a ringing signal, the photo coupler 6 closes by a Dial Pulse (DP) signal of I/O part 9 under control of the controller 12. As the photo coupler 6 closes, the above-mentioned DC loop is formed. The DC loop returns to the switching system 21 a DC current produced by a DC voltage applied by the switching system 21,by which to notify to the switching system that the facsimile device 100 is ready to communicate. The formation of the DC loop is released as the photo coupler 6 is opened when the transmission or reception of facsimile data is finished.

A circuit protector 4 is formed by a varistor that passes a DC current at an operating voltage point, e.g., higher than the AC voltage of the ringing signal and lower than the withstand voltages of the photo coupler 6 and the DC loop maintaining circuit 7. The circuit protector 4, through the change-over switch 5, is connected in parallel with the photo coupler 6 and the DC loop maintaining circuit 7 as the constituent parts of the DC loop. The switch 5 connects or disconnects the circuit protector 4 to or from the DC loop by a Circuit Protection (CT) signal from the I/O part 9 under control of the controller 12. The circuit protector 4 forms a by-pass in parallel with the photo coupler 6 and the DC loop 7 by the closing of the change-over switch 5. When an impulse voltage as a result of lightning is applied to the line 200, the circuit protector 4 conducts the above-mentioned DC current at the operating voltage point to thereby protect the photo coupler 6 and the DC loop maintaining circuit 7.

The transformer 8 converts a facsimile data signal received from the switching system 21 into a signal suitable for the modem 10, and also converts a facsimile data signal sent from the modem 10 into a signal suitable for the switching system 21.

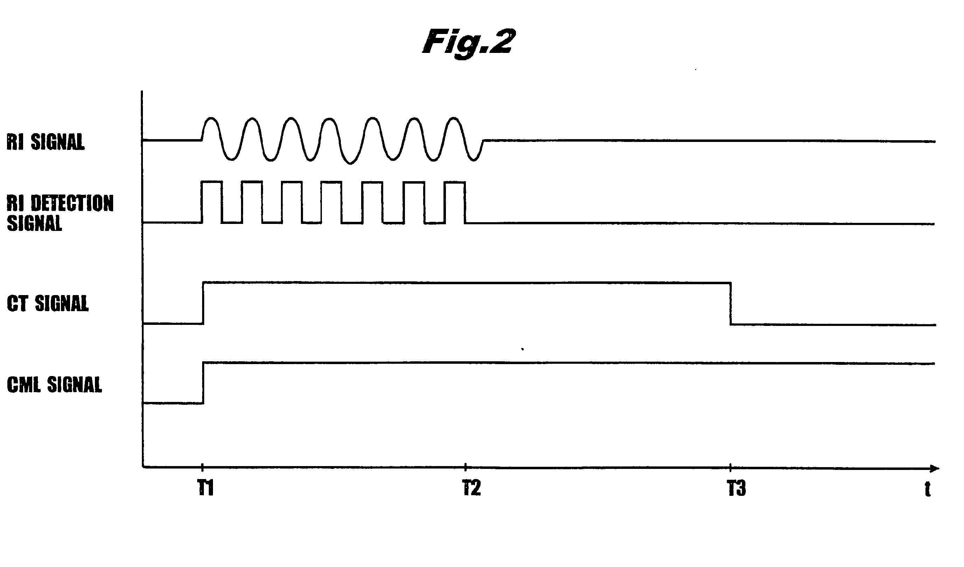

Fig. 2 is a time chart showing the operation of the facsimile device according to the first embodiment of the present invention.

As shown in Fig. 2, when, at time T1, a ringing signal RI is sent to the facsimile device 100 from the switching system 21 through the line 200, the detector 2 receives and detects the RI signal through the CML relay 1(1). Then, the detector 2 outputs an RI detection signal indicating that it has received the RI signal, to the controller 12 through the RI terminal of the I/O part 9. On receiving the RI signal, the controller 12 causes the I/O part 9 to send a CT signal to open the change-over switch 5. Therefore, the circuit protector 4 is isolated from the DC loop, which has not been formed, so that the by-pass is not formed, which protects the photo coupler 6 and the DC loop maintaining circuit 7. The controller 12 opens the CML relay 1(1) by an SR signal, or closes the CML relay 1(2) by a CML signal.

The switching system 21 at time T1 starts to apply the DC voltage to the facsimile device 100 through the line 200.

Because the RI signal repeats ringing for one second and stopping for two seconds, when sending of the RI signal terminates temporarily at time T2 after about one second from time T1, the detector 2 detects and notifies the stoppage of the RI signal to the controller 12 through the I/O part 9. However, even after receiving this notification, the controller 12 keeps the CML relays 1(1) and 1(2) and the change-over switch 5 of the line connection circuit 20 in the current states.

At time T3 about two seconds after time T2, the controller 12 causes the I/O part 9 to send a DP signal to close the photo coupler 6 to thereby form the DC loop and also send a CT signal to close the change-over switch 5 to connect the circuit protector 4 to the formed DC loop. When the DC loop is formed, by the DC voltage being applied by the switching system 21 to the facsimile device 100, a DC current flows through the switching system 21, the line 200 and the DC loop. When recognizing the DC current, the switching system 21 completely stops sending the RI signal. When the sending of the RI signal has been stopped completely, the switching system starts transmitting facsimile data to the facsimile device 100.

While facsimile data is being transmitted or received, if an impulse voltage, such as lightning, is applied to the line 200, in other words, if a high impulse voltage higher than the operating voltage of the circuit protector 4 is applied to the line 200, as with the conventional facsimile device, an impulse current resulting from the impulse voltage flows through the by-pass formed by the circuit protector 4 and the change-over switch 5, thus protecting the photo coupler 6 and the DC loop maintaining circuit 7 from the impulse voltage.

In the facsimile device according to the first embodiment, when the ringing signal is sent before facsimile data is transmitted or received by the facsimile device, the circuit protector 4 has been isolated from the DC loop by the change-over switch 5, in other words, the by-pass has not been formed which protects the photo coupler 6 and the DC loop maintaining circuit 7. More specifically, the controller 12, when detecting a ringing signal from the switching system 21, isolates the circuit protector 4 from the DC loop which has not been formed. Therefore, when the ringing signal contains an over-voltage, it is possible to prevent a serious situation that this over-voltage produces a DC current that flows to the by-pass including the circuit protector 4 and that this DC current flows through the line 200 to the switching system 21.

While a ringing signal is transmitted or received, if the ringing signal contains an over-voltage, this over-voltage is applied directly to the photo coupler 6 and the DC loop maintaining circuit 7. However, being far lower than an impulse voltage caused by lightning, this over-voltage never damages the photo coupler 6 and the DC loop maintaining circuit 7. Therefore, it is possible to prevent a dangerous situation that a DC current caused by the over-voltage passes through the circuit protector 4 and flows to the switching system 21 and prevent damage to the photo coupler 6 and the DC loop maintaining circuit 7. Thus, malfunctioning that used to occur due to a ringing signal containing an over-voltage can be prevented from occurring.

On the other hand, when an impulse voltage such as lightning occurs while a ringing signal is transmitted or received, the impulse voltage is applied directly to the photo coupler 6 and the DC loop maintaining circuit 7, which therefore are not protected. However, in the transmission or reception of facsimile data, the photo coupler 6 and the DC loop maintaining circuit 7 can be protected securely by the circuit protector 4 from an impulse voltage as mentioned above. The time required for sending or receiving the ringing signal is incomparably lower than the time for transmitting or receiving facsimile data. Therefore, the possibility is extremely low for an impulse voltage to occur during transmission or reception of the ringing signal, so that it substantially matters little whether countermeasures for thunder during transmission or reception of the ringing signal are sufficient or not.

Therefore, by the facsimile device according to the present invention, it is possible to preclude a case where facsimile communication cannot be performed due to a DC current resulting from a ringing signal that contains an over-voltage during the transmission or reception of a ringing signal. Furthermore, it is possible to avoid a case where the photo coupler 6 and the DC loop 7 are damaged by an impulse voltage, such as lightning, which is applied to them while facsimile data is being transmitted or received.

In the above-mentioned facsimile device according to the first embodiment, the by-pass is formed by connecting the circuit protector 4 into the DC loop before a complete stoppage of the transmission of the ringing signal by the switching system 21. Instead of this, for example, it is also possible to form the by-pass in response to the detector's detection that the transmission of the ringing signal by the switching system 21 has stopped completely. To completely avoid trouble that a DC current caused by the over-voltage in the ringing signal flows to the circuit protector 4, forming the by-pass after detecting a complete stoppage of transmission of the ringing signal is more desirable than forming the by-pass without detecting the complete stoppage of the ringing signal transmission.

### Embodiment 2

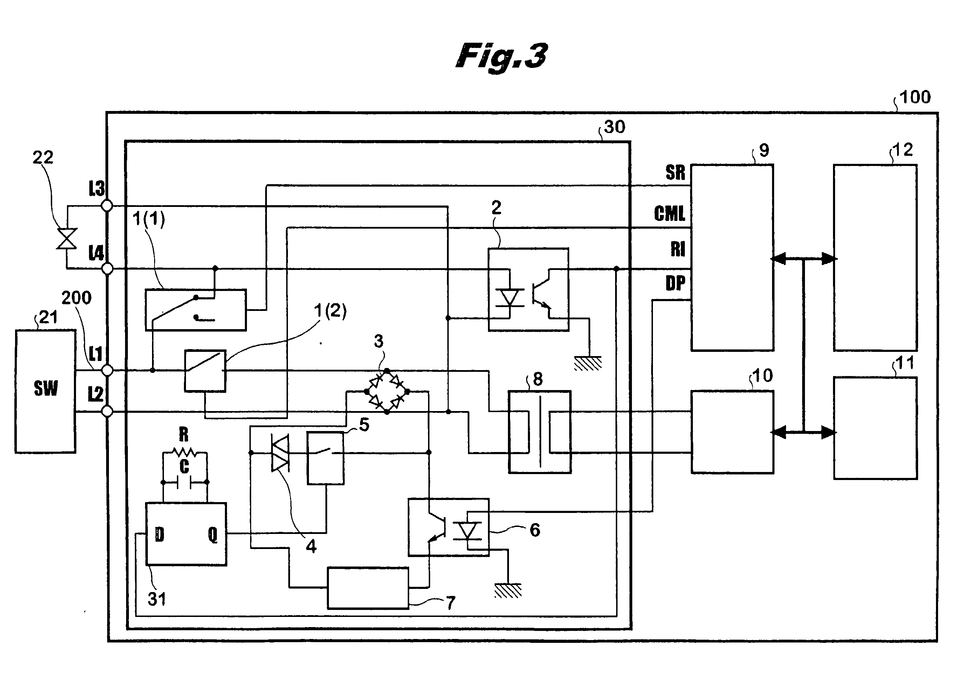

Fig. 3 shows a structure of the facsimile device according to a second embodiment of the present invention. In the first embodiment mentioned above, the operation of the change-over switch 5 for connecting or disconnecting the circuit protector 4 is controlled by a CT signal from the I/O part under control of the controller 12. In the second embodiment, an adjusting 31, which is used to control the change-over switch 5 by an RI detection signal from the detector 2 in place of the CT signal, is provided between the detector 2 and the change-over switch 5 in the line connection circuit 30. The other aspects of the structure of the second embodiment are the same as those of the first embodiment.

The adjusting 31 is formed by a one-shot multivibrator, for example, and adjusts the opening-and-closing timing of the change-over switch 5. More specifically, the adjusting 31 opens the change-over switch 5 immediately in response to an RI detection signal that is output when the detector 2 detects the RI signal, and after passage of time corresponding to the time between time T1 and time T2, which have been described referring to the first embodiment and which is determined by a resistance R and a capacitor C, the adjusting 31 automatically closes the change-over switch 5. In other words, isolates the circuit protector 4 from the DC loop, that is to say, releases the formation of the by-pass as mentioned above.

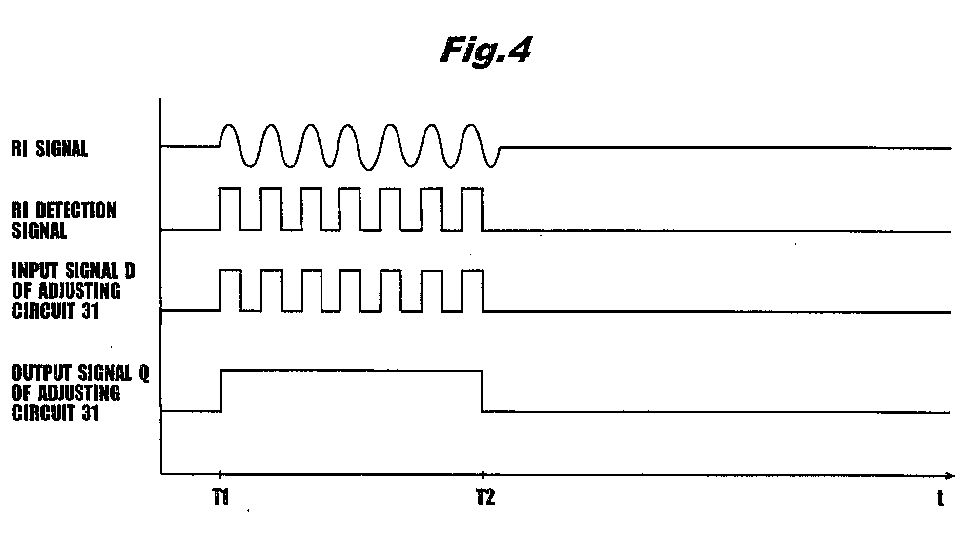

Fig. 4 is a time chart showing the operation of the facsimile device according to the second embodiment.

When, at time T1, an RI signal is sent from the switching system 21 to the facsimile device 100 through the line 200, the detector 2 outputs an RI detection signal to the controller 12 through the I/O part 9, and also outputs the RI detection signal directly to the adjusting 31. When receiving the RI signal, the controller 12, just as in the operation in the first embodiment, causes the I/O part 9 to send an SR signal to open the CML relay 1(1) and also causes the I/O part 9 to send a CML signal to close the CML relay 1(2). On the other hand, the adjusting 31 isolates the circuit protector 4 from the DC loop, which has not been formed, in other words, releases the formation of the by-pass by switching the change-over switch 5 to the open state in response to an RI detection signal from the detector 2.

At time T2 after passage of about one second from time T1, the transmission of the RI signal is suspended temporarily in the same way as in the operation in the first embodiment. When detecting a temporary suspension of the RI signal, the detector 2 notifies this to the controller 12 which, responding to this notification, closes the photo coupler 6 by a DP signal. Thus, the DC loop is formed. Moreover, at time T2, when a specified time determined by the resistance R and the capacitor C connected to the adjusting 31 has passed, the adjusting 31 closes the change-over switch 5, so that the circuit protector 4 is connected to the DC loop, in other words, the by-pass is formed. In short, at time T2, the DC loop and the by-pass are formed.

When the DC loop is formed, in the same as in the operation in the first embodiment, by a DC voltage which has been applied by the switching system 21, a DC current flows to the DC loop. When detecting this DC current, the switching system 21 stops sending the RI signal, and then starts transmitting facsimile data by following a specified communication procedure.

In the facsimile according to the second embodiment, as mentioned above, taking as a trigger an RI detection signal from the detector 2, indicating that it detected an RI signal, the adjusting 31 opens the change-over switch 5 to thereby isolate the circuit protector 4 from the DC loop not yet formed, thus releasing the formation of the by-pass. On the other hand, after passage of a specified time determined by the resistance R and the capacitor C, which corresponds to a time between time T1 and time T2, the adjusting 31 closes the change-over switch 5 to thereby connect the circuit protector 4 into the DC loop that has been established by a DP signal, in other words, the adjusting 31 forms the by-pass. Therefore, it is not necessary to switch over the change-over switch 5 between the open and close states by using a CT signal of the I/O part 9 as in the first embodiment, so that it is possible to make the number of output terminals of the I/O part 9 smaller by one than that in the facsimile device in the first embodiment.

### Third Embodiment

In the facsimile device in the first and second embodiments, the photo coupler 6 and the DC loop maintaining circuit 7 are always connected to the line 200. In contrast, in the facsimile device in the third embodiment, the photo coupler 6 and the DC loop maintaining circuit 7 are connected to the line 200 only when facsimile communication is carried out. By this arrangement, it is possible to protect the photo coupler 6 and the DC loop maintaining circuit from an impulse voltage if an impulse voltage, such as lightning, is applied to the line 200 when a ringing signal is transmitted or received prior to transmission or reception of facsimile data.

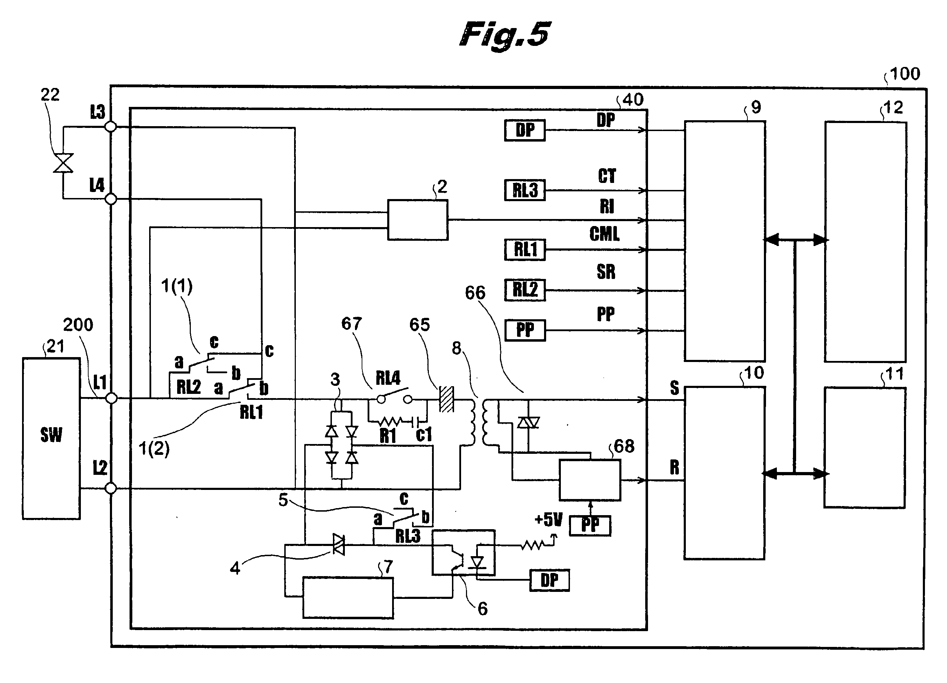

Fig. 5 shows a structure of the facsimile device according to the third embodiment of the present invention. In this facsimile device 100, to protect the photo coupler 6 and the DC loop maintaining circuit 7, the change-over switch 5, which forms or releases the DC loop and also forms or releases the by-pass, is connected in series with the photo coupler 6 and the DC loop maintaining circuit 7, and is also connected in series with the circuit protector 4.

The facsimile device 100 according to the third embodiment further comprises an impedance switch 67 and an amplifier 68, in the line connection circuit 40, to adjust the impedance and the gain for transmission and reception of facsimile data in addition to the same structure as in the facsimile devices in the first and second embodiments.

An impedance switch 67 switches over the input impedance of the facsimile device 100 with respect to the line 200. More specifically, the relay RL4 of the impedance switch 67 is closed before facsimile communication to keep the input impedance at a low level during the communication.

The amplifier 68, which functions linked with the impedance switch 67, amplifies with a low gain a facsimile data signal received through the impedance switch 67 set at a low impedance during facsimile communication, and outputs an amplified signal to the modem 10.

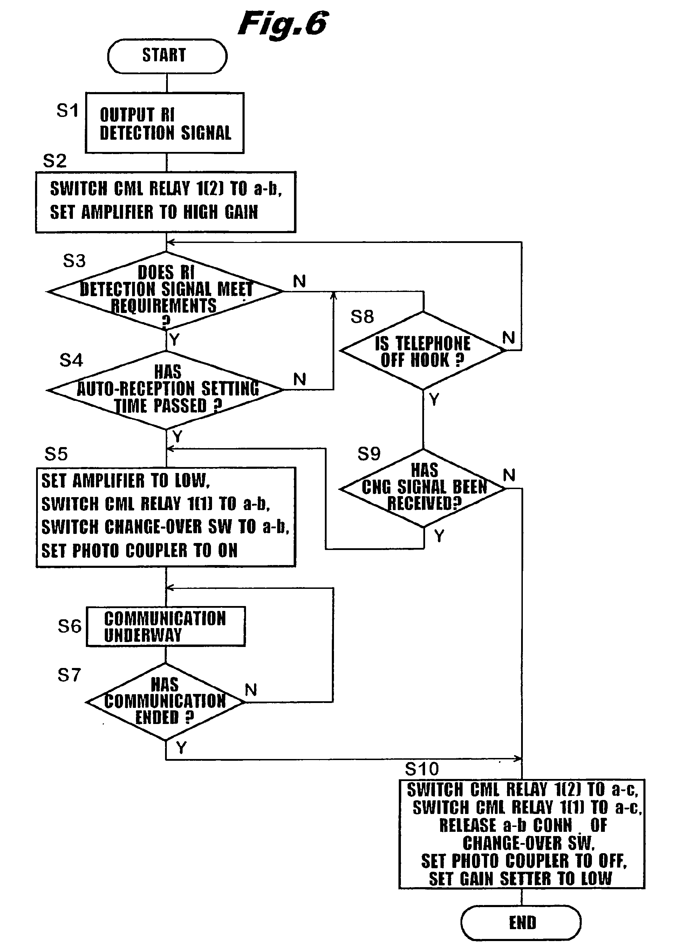

Fig. 6 is a flowchart showing the operation of the facsimile device according to the third embodiment.

Step S1: The switching system 21 sends the RI signal to the facsimile device 100. When detecting the RI signal, the detector 2 outputs an RI detection signal, which corresponds to the waveform of the RI signal to indicate that it detected the RI signal, to the controller 12 through the I/O part 9. Also, the switching system 21 starts applying a DC voltage to the facsimile device.

Step 2: Wen receiving the RI detection signal in a step S1, the controller 12 switches over the CML relay 1(2) to the a-b connection state by a CML signal from the I/O part 9, and sets the amplifier 68 to a high gain by a Parallel Pickup (PP) signal. Because the change-over switch 5 remains in the a-c state at this point in time, the DC loop has not been formed. Therefore, a DC current does not flow, which is produced by the DC voltage applied by the switching system 21.

Step S3: When receiving an RI signal in a step S2, the controller 12 decides whether or not the RI detection signal meets specified requirements, such as its frequency and duration

Step S4: If it makes a decision that the RI detection signal meets the specified requirements in the step S3, the controller 12 decides whether or not a preset automatic reception setting time has elapsed, which is a time for the facsimile device 100 to wait till it starts automatic reception.

Step S5: If in the step S4 it makes a decision that the automatic reception setting time has elapsed, the controller 12 sets the amplifier 68 at a low gain by a PP signal of the I/O part 9, switches the CML relay 1(1) to the a-b connection state by an SR signal, switches the change-over switch 5 to the a-b connection state by a CT signal, and switches the photo coupler 6 to the closed state by a DP signal. By setting the change-over switch 5 to the a-b connection and closing the photo coupler 6, the DC loop is formed. On the other hand, by switching the change-over switch 5 to the a-b connection, the by-pass is formed. When the DC loop is formed, by the DC voltage applied by the switching system 21, the DC current is produced and flows through the DC loop. Thus, preparations have been made for facsimile communication.

Step S6: When preparations for facsimile communication have been completed, the switching system 21 detects the DC current, and accordingly stops sending the RI signal. Having stopped sending the RI signal, the switching system 21 starts transmitting facsimile data.

Step S7: The facsimile device 100 decides whether or not transmission and reception of facsimile data that started in the step S6 have been finished.

Step S8: If it decided in the step S3 that the RI detection signal did not meet the specified requirements or if it decided in the step S4 that the automatic reception setting time had not elapsed, the controller 12 decide whether or not the telephone 22 is in off-hook state.

Step S9: If it decided in the step S8 that the telephone 22 was in off-hook state, the controller 12 decides whether or not a CNG (Calling Tone) signal indicating the start of facsimile communication, which is a facsimile procedure signal, has been received.

If it decided in the step S8 that the telephone 22 was not in off-hook state, the controller 12 decides in the step S3 whether or not the RI detection signal meet specified requirements.

Step S10: If a decision was made that the CNG signal had not been received, the controller 12 switches the CML relay 1(2) to the a-c connection state by a CML signal from the I/O part 9, switches the CML relay 1(1) to the a-c connection state by an SR signal, switches the change-over switch 5 to the a-c state by a CT signal, sets the amplifier 68 to low gain by a PP signal, and opens the photo coupler 6 by a DP signal. By switching the change-over switch 5 to the a-c state and opening the photo coupler 6, the formation of the FC loop is released, and by switching the change-over switch 5 to the a-c state, the circuit protector 4 is isolated from the DC loop, in other words, the formed by-pass is released.

If a decision was made in the step S9 that the CNG signal had been received, preparations for facsimile communication are made in the step S5.

According to the facsimile device of the third embodiment, as described above, in the step S5, which is just before the start of transmission or reception of facsimile data, in which the change-over switch 5 is changed over to the a-b connection state and the photo coupler 6 is closed, the DC loop is formed. In other words, just before the start of transmission or reception of facsimile data, the photo coupler 6 and the DC loop maintaining circuit 7 are connected to the line 200. Therefore, as in the first and second embodiments, in addition to the possibility of avoiding a conventional problem that the over-voltage contained in the ringing signal causes a DC current to flow to the by-pass, which includes the circuit protector 4, during transmission or reception of the ringing signal before transmission or reception of facsimile data, resulting in the DC current flowing through the line 200 to the switching system 21, it is also possible to avoid a situation that while a ringing signal is transmitted or received, an impulse voltage, such as lightning, is applied to the line 200, thereby destroying the photo coupler 6 and the DC loop maintaining circuit 7.

### Fourth Embodiment

A facsimile device according to a fourth embodiment of the present invention has as its object to reduce the number of terminals used at the I/O part 9 of the facsimile device according to the third embodiment. For this reason, in the facsimile device according to the fourth embodiment, between the I/O part 9 and the change-over switch 5 there is provided an adjusting 71 for switching over the change-over switch 5 by a DP signal, which is used as a change-over signal for the photo coupler 6. The adjusting 71 shapes the waveform of the DP signal on receiving the DP signal from the I/O part 9 and outputs the shaped DP signal to the change-over switch 5.

The other aspects of the structure of the facsimile device in the fourth embodiment are the same as the structure of the facsimile device in the third embodiment.

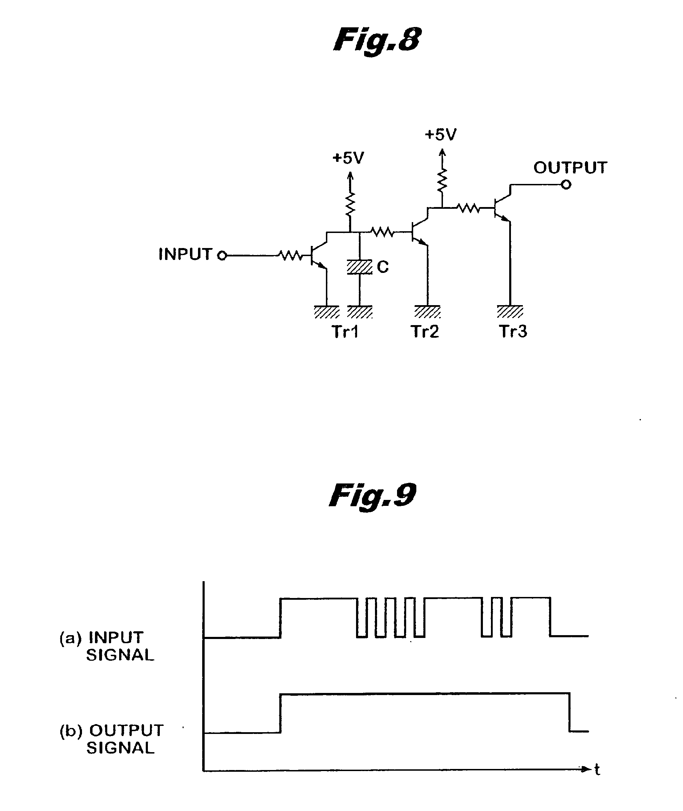

Fig. 8 is a circuit diagram of the adjusting 71, and Fig. 9 is a time chart showing the operation of the adjusting 71. As shown in Fig. 8, the adjusting 71 is formed by transistors Tr1 and Tr2 for waveform shaping, added with a transistor Tr3 for output buffer. The degree of waveform shaping is determined by the capacitance of the capacitor C.

The adjusting 71, on receiving a DP signal that repeatedly goes high and low at short periods from the I/O parts as shown in Fig. 9(a), smoothens the DP signal and outputs the smooth-ened signal as shown in Fig. 9(b).

The operation of the facsimile device in the fourth embodiment will be described by clarifying differences from the operation of the facsimile device in the third embodiment.

In the step S5 in Fig. 6, the controller 12 switches the photo coupler 6 to the closed state by a DP signal as shown in Fig. 9(a) by using the I/O part 9. In response to this DP signal, the adjusting 71 outputs a changeover signal RL3 as shown in Fig. 9(b) to switch the change-over switch 5 to the a-b connection state. By this changeover signal RL3, the change-over switch 5 is switched to the a-b connection state. As in the third embodiment, the DC loop is formed by switching the change-over switch 5 to the a-b connection and closing the photo coupler 6, and the by-pass, including the circuit protector 4, is formed by switching the change-over switch 5 to the a-b connection.

In the step S10 in Fig. 6, the controller 12 opens the photo coupler 6 by a DP signal using the I/O part 9. In response to this DP signal, the adjusting 71 outputs a change-over signal RL3 to switch the change-over switch 5 to the a-c state. By this change-over signal RL3, the change-over switch 5 is changed over to the a-c state. As in the third embodiment, the formation of the DC loop is released by switching the change-over switch 5 to the a-c state and opening the photo coupler 6, and the formation of the by-pass, including the circuit protector 4, is released by switching over the change-over switch 5 to the a-c state.

According to the facsimile device in the fourth embodiment, as mentioned above, because the change-over switch 5 is changed over by a change-over signal RL3, which is used to change over the state of the change-over switch 5 and which is output by the adjusting 71 in response to a DP signal for switching over the photo coupler 6, it is possible to make the terminals used at the I/O part 9 smaller by one than in the facsimile device in the third embodiment, which switch over the change-over switch 5 by a CT signal (from the I/O part 9) dedicated to changing over the change-over switch 5.

### Fifth Embodiment

The facsimile device according to a fifth embodiment of the present invention has its object to reduce the number of terminals used at the I/O part as in the facsimile device according to the fourth embodiment.

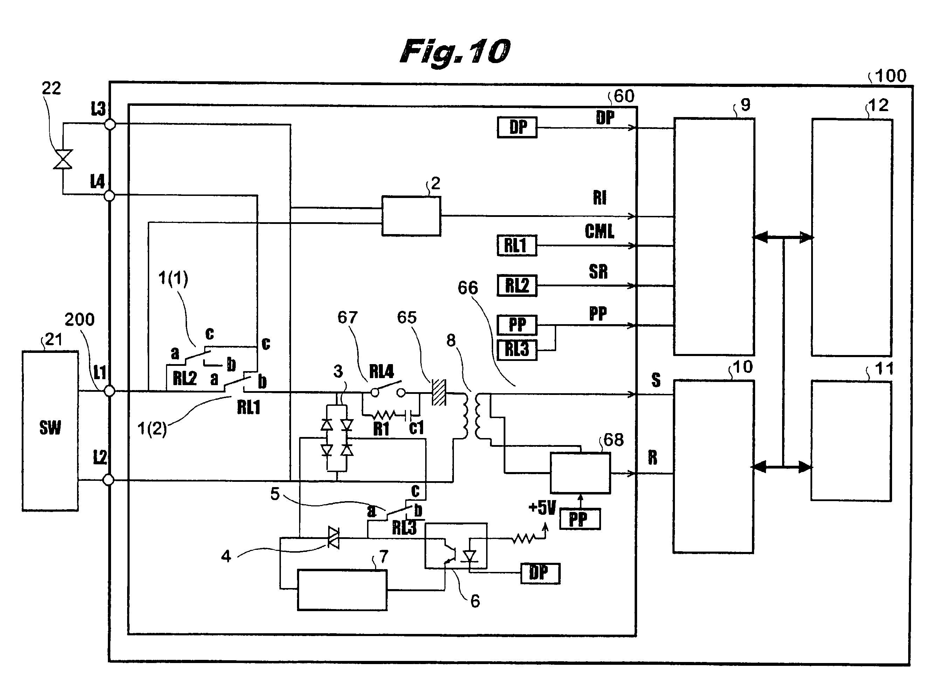

Fig. 10 shows a structure of the facsimile device according to the fifth embodiment.

In the facsimile device 100 in the fifth embodiment, the wires related to the change-over switch 5 differ from the wires of the change-over switch 5 in the third and fourth embodiments. In other words, the change-over switch 5 in the fifth embodiment is connected with the rectifier 3, the circuit protector 4 and the photo coupler 6 so that the change-over switch 5 can be opened or closed by a PP signal, which has been provided as a change-over signal for the amplifier 68. The other aspects of the structure of the facsimile device in the fifth embodiment are the same as in the facsimile devices in the third and fourth embodiments.

The operation of the facsimile device in the fifth embodiment will be described by clarifying differences from the operation of the facsimile device in the third embodiment.

On receiving an RI detection signal from the detector 2 in the step S2 following the step S1 in Fig. 6, the controller 12 changes over the CML relay 1(2) to the a-b connection by a CML signal, sets the amplifier 68 to high gain by a signal from the PP terminal, and switches the change-over switch 5 to the a-b connection by a PP signal. By switching the change-over switch 5 to the a-b connection, the formation of the DC loop is released and the circuit protector 4 is isolated from the DC loop, the formation of which has been released. In other words, the formation of the by-pass, including the circuit protector 4, is released.

In the step S5 following the steps S3 and S4 in Fig. 6, the controller 12 sets the amplifier 68 to low gain by a PP signal, switches the change-over switch 5 to the a-c state, which be noted to differ from the a-b state shown in srep S5 of Fig. 6, by the PP signal, changes over the CML relay 1(1) to the a-b connection by an SR signal, and closes the photo coupler 6 by a DP signal. By switching the change-over switch 5 to the a-c state and closing the photo coupler 6, the DC loop is formed, and by switching the change-over switch 5 to the a-c state, the circuit protector 4 is connected to the DC loop, in other words, the by-pass is formed.

In the step S10 following the steps S7 and S8 in Fig. 6, the controller 12 changes over the CML relay 1(2) to the a-c connection, changes over the CML relay 1(1) to the a-c connection, opens the photo coupler 6, sets the amplifier 68 to low gain, and keeps the change-over switch 5 in the a-c state. Even if the change-over switch 5 is in the a-c state, because CML relay 1(2) is put in the a-c connection state, the photo coupler 6 and the DC loop maintaining circuit 7 are isolated from the line 200, and therefore the DC loop and the by-pass, which have been formed, are substantially released.

According to the facsimile device in the fifth embodiment, as mentioned above, in the step S5 just before the start of transmission or reception of facsimile device, by switching the change-over switch 5 by a PP signal, which has been provided as a changeover signal for the amplifier 68, the DC loop and the by-pass are formed, and the DC loop and the by-pass, which have been formed, are released substantially in the step S10 at the end of transmission or reception of facsimile data. Therefore, as in the third and fourth embodiments, when a ringing signal contains over-voltage, it is possible to prevent a problem that a DC current flows which results from the over-voltage. Moreover, because the change-over switch 5 is changed over by a PP signal as a change-over signal for the amplifier 68 instead of a CT signal provided as a change-over signal dedicated to the change-over switch 5 as in the third embodiment, it is possible to make the number of terminals used at the I/O part 9 smaller by one than in the third embodiment.

## Claims

1. A facsimile device (100) having
an AC loop to be formed for being connected to a communication line (200) to receive a facsimile data signal from a switching system (21) following a ringing signal when detecting the AC voltage of a ring-ing signal to call the facsimile device sent through the line (200) from the switching system;
a DC loop to be formed for being connected to the line in parallel with the AC loop to send the switching system an DC current indicating that the facsimile device is ready to receive the facsimile data; and
a change-over element (6), inserted in the DC loop, for closing or opening the DC loop;
**characterized by**
a protective circuit (4) selectively connectable to the DC loop to protect the change-over element (6) by allowing a current to flow through a by-pass formed by the protective circuit (4) and a change-over circuit (5), the current being produced when a voltage larger than the AC voltage of the ringing signal is applied to the change-over element (6); and
the change-over circuit (5) configured to perform opening/closing actions so as to cut off the connection between the DC loop and the protective circuit (4) when receiving the ringing signal, and afterward, to establish a connection between the DC loop and the protective circuit (4) not later than when the ringing signal stops.

2. The facsimile device according to Claim 1, wherein the protective circuit (4) protects the change-over element (6) from lightning.

3. The facsimile device according to Claim 1, wherein the protective circuit (4) is connected in parallel with the change-over element (6) by the change-over circuit (5), and wherein the change-over circuit (5) is connected in series with the protective circuit (4).

4. The facsimile device according to Claim 1, wherein the protective circuit (4) is connected in parallel with said change-over element (6) by the change-over circuit (5) and wherein the change-over circuit (5) is connected in series with the change-over element (6) and also in series with the protective circuit (4) to simultaneously open or close the DC loop and connect the protective circuit (4) to the DC loop.

5. The facsimile device according to Claim 3 or 4, wherein the protective circuit (4) is a varistor, the change-over circuit (5) is a relay, and the change-over element (6) is a photo coupler.

6. The facsimile device according to any of Claims 3 to 5, further comprising an adjusting circuit (31) for operating the change-over circuit (5) to isolate the protective circuit (4) from the DC loop for a time from when the ringing signal is received until a specified time elapses.

7. The facsimile device according to any of Claims 3 to 5, further comprising an adjusting circuit (71) for operating the change-over circuit (5) to connect the protective circuit (4) to the DC loop in response to the formation of the DC loop by the change-over element (6).

8. The facsimile device according to Claim 1, further comprising a telephone (22) responsive to the ringing signal, wherein when the telephone responds to the ringing signal, the AC loop is used to detect whether or not a facsimile procedure signal indicative of a start of facsimile communication is received through the line.

## Patentansprüche

1. Faxgerät (100), umfassend
eine Wechselstromschaltung, die zur Verbindung mit einer Datenübertragungsverbindung (200) und zum Empfang eines einem Anrufsignal nachfolgenden Faxdatensignals eines Vermittlungssystems (21) ausgelegt ist, wenn die Wechselspannung des Anrufsignals zum Anrufen des Faxgeräts (100), das von dem Vermittlungssystem (21) über die Datenübertragungsverbindung (200) übertragen wird, erkannt wird;
eine Gleichstromschaltung, die parallel zur Wechselstromschaltung zur Verbindung an die Datenübertragungsverbindung (200) ausgelegt ist, um dem Vermittlungssystem (21) ein Gleichstromsignal zu senden, das anzeigt, dass das Faxgerät zum Empfang von Faxdaten bereit ist;
ein Übertragungselement (6), das in der Gleichstromschaltung eingeschaltet ist, um die Gleichstromschaltung zu schließen oder zu öffnen;
**gekennzeichnet durch**,
eine Schutzschaltung (4), die schaltbar mit der Gleichstromschaltung zum Schutz des Übertragungselements (6) verbunden ist, wobei eine Strom über eine Umgehungsschaltung, die die Schutzschaltung (4) und eine Übertragungsschaltung (5) umfasst, an dem Übertragungselement (6) vorbeigeleitet wird, wobei der Strom fließt, falls eine höhere Spannung als die Wechselspannung des Anrufsignals an dem Übertragungselement (6) angelegt ist, und
eine Übertragungsschaltung (5), die dazu ausgelegt ist, **durch** Öffnungs- und Schließvorgänge die Verbindung zwischen der Gleichstromschaltung und der Schutzschaltung (4) zu trennen, wenn das Anrufsignal empfangen wird, und anschließend unmittelbar nach Beendigung des Anrufsignals eine Verbindung zwischen der Gleichstromschaltung und der Schutzschaltung (4) herzustellen.

2. Faxgerät nach Anspruch 1,
**dadurch gekennzeichnet,**
**dass** die Schutzschaltung (4) das Übertragungselement (6) vor Blitzschlag schützt.

3. Faxgerät nach Anspruch 1 ,
**dadurch gekennzeichnet,**
**dass** die Schutzschaltung (4) über die Übertragungsschaltung (5) parallel zum Übertragungselement (6) geschaltet ist und die Übertragungsschaltung (5) in Reihe mit der Schutzschaltung (4) geschaltet ist.

4. Faxgerät nach Anspruch 1,
**dadurch gekennzeichnet,**
**dass** die Schutzschaltung (4) über die Übertragungsschaltung (5) parallel zum Übertragungselement (6) geschaltet ist und die Übertragungsschaltung (5) in Reihe mit dem Übertragungselement (6) und in Reihe mit der Schutzschaltung (4) geschaltet ist, um simultan die Gleichstromschaltung zu öffnen oder zu schließen und die Schutzschaltung (4) mit der Gleichstromschaltung zu verbinden.

5. Faxgerät nach Anspruch 3 oder 4,
**dadurch gekennzeichnet,**
**dass** die Schutzschaltung (4) ein Varistor, die Übertragungsschaltung (5) ein Relais und das Übertragungselement (6) ein Photokoppler ist.

6. Faxgerät nach einem der Ansprüche 3 bis 5,
**dadurch gekennzeichnet,**
**dass** das Faxgerät des Weiteren eine Einstellschaltung (31) zum Betrieb der Übertragungsschaltung (5) umfasst, die die Schutzschaltung (4) vom Gleichstromkreis für eine bestimmte Zeit, ab der das Anrufsignal empfangen wird, abtrennt.

7. Faxgerät nach einem der Ansprüche 3 bis 5,
**dadurch gekennzeichnet,**
**dass** das Faxgerät des Weiteren eine Einstellschaltung (71) zum Betrieb der Übertragungsschaltung (5) umfasst, um die Schutzschaltung (4) mit dem Gleichstromkreis zu verbinden, falls der Gleichstromkreis durch das Übertragungselement (6) hergestellt wird.

8. Faxgerät nach Anspruch 1,
**dadurch gekennzeichnet,**
**dass** das Faxgerät des Weiteren ein Telefon (22) umfasst, das das Anrufsignal aufnehmen kann, wobei, falls das Telefon (22) das Anrufsignal aufnimmt, der Wechselstromkreis zur Erkennung verwendet wird, ob eine Faxprozedursignal, das den Beginn einer Faxübertragung anzeigt, über die Datenübertragungsverbindung (200) empfangen wird.

## Revendications

1. Télécopieur (100) comprenant :
une maille CA à former pour être relié à une ligne (200) de communication afin de recevoir un signal de données de télécopie provenant d'un système (21) de commutation suite à un signal de sonnerie lors de la détection de la tension CA d'un signal de sonnerie visant à appeler le télécopieur et envoyé par l'intermédiaire de la ligne (200) à partir du système de commutation ;
une maille CC à former pour être relié à la ligne en parallèle avec la maille CA afin d'envoyer au système de commutation un courant CC indiquant que le télécopieur est prêt à recevoir les données de télécopie ; et
un élément inverseur (6), inséré dans la maille CC, destiné à fermer ou à ouvrir la maille CC;
**caractérisé par**
un circuit protecteur (4) pouvant être relié sélectivement à la maille CC pour protéger l'élément inverseur (6) en permettant à un courant de circuler à travers une dérivation formée par le circuit protecteur (4) et un circuit (5) de permutation, le courant étant produit lorsqu'une tension supérieure à la tension CA du signal de sonnerie est appliquée à l'élément inverseur (6) et
le circuit (5) de permutation configuré pour effectuer des actions d'ouverture / de fermeture de façon à couper la liaison entre la maille CC et le circuit protecteur (4) lors de la réception du signal de sonnerie, et établir ensuite une liaison entre la maille CC et le circuit protecteur (4), au plus tard lorsque le signal de sonnerie cesse.

2. Télécopieur selon la revendication 1, le circuit protecteur (4) protégeant l'élément inverseur (6) de la foudre.

3. Télécopieur selon la revendication 1, le circuit protecteur (4) étant branché en parallèle avec ledit élément inverseur (6) par le circuit (5) de permutation et le circuit (5) de permutation étant branché en série avec le circuit protecteur (4).

4. Télécopieur selon la revendication 1, le circuit protecteur (4) étant branché en parallèle avec ledit élément inverseur (6) par le circuit (5) de permutation et le circuit (5) de permutation étant branché en série avec l'élément inverseur (6) et également en série avec le circuit protecteur (4) afin d'ouvrir ou de fermer la maille CC et de relier simultanément le circuit protecteur (4) à la maille CC.

5. Télécopieur selon la revendication 3 ou 4, le circuit protecteur (4) étant un varistor, le circuit (5) de permutation étant un relais et l'élément inverseur (6) étant un photocoupleur.

6. Télécopieur selon l'une quelconque des revendications 3 à 5, comportant en outre un circuit (31) de réglage destiné à actionner le circuit (5) de permutation pour isoler momentanément le circuit protecteur (4) de la maille CC à partir de l'instant où le signal de sonnerie est reçu et jusqu'à ce qu'un délai spécifié s'écoule.

7. Télécopieur selon l'une quelconque des revendications 3 à 5, comportant en outre un circuit (71) de réglage destiné à actionner le circuit (5) de permutation pour relier le circuit protecteur (4) à la maille CC en réponse à la formation de la maille CC par l'élément inverseur (6).

8. Télécopieur selon la revendication 1, comportant en outre un téléphone (22) susceptible de réagir au signal de sonnerie, la maille CA étant utilisée, lorsque le téléphone réagit au signal de sonnerie, pour détecter la réception ou la non réception à travers la ligne d'un signal de procédure de télécopie indiquant le début d'une communication de télécopie.
